Europäisches Patentamt

European Patent Office

Office européen des brevets

(11) Veröffentlichungsnummer: **0 461 260 A1**

## (12) EUROPÄISCHE PATENTANMELDUNG
### veröffentlicht nach Art. 158 Abs. 3 EPÜ

(21) Anmeldenummer: 90905373.8

(22) Anmeldetag: 29.12.89

(86) Internationale Anmeldenummer: PCT/SU89/00342

(87) Internationale Veröffentlichungsnummer: WO 91/09979 (11.07.91 91/15)

(51) Int. Cl.5: **C22C 1/04, B23H 7/22**

(43) Veröffentlichungstag der Anmeldung: 18.12.91 Patentblatt 91/51

(84) Benannte Vertragsstaaten: AT CH DE FR GB IT LI NL SE

(71) Anmelder: **INSTITUT STRUKTURNOI MAKROKINETIKI AKADEMII NAUK SSSR** Moskovskaya oblast Poselok Chernogolovka 142432(SU)

(72) Erfinder: **INADZE, Malkhaz Vladimirovich** Shkolny bulvar, 1b-60b Moskovskaya obl. pos. Chernogolovka, 142432(SU)
Erfinder: **PODLESOV, Vadim Veniaminovich** Shkolny bulvar, 11-17 Moskovskaya obl. pos. Chernogolovka, 142432(SU)

Erfinder: **STOLIN, Alexandr Moiseevich** Institutsky pr., 6-86 Moskovskaya obl. pos. Chernogolovka, 142432(SU)
Erfinder: **MERZHANOV, Alexandr Grigorievich** ul. Tretya, 3-2 Moskovskaya obl. pos. Chernogolovka, 142432(SU)
Erfinder: **BUCHATSKY, Leonid Mikhailovich** ul. Lesnaya, 5-99 Moskovskaya obl. pos. Chernogolovka, 142432(SU)

(74) Vertreter: **Röhl, Wolf Horst** Rethelstrasse 123 W-4000 Düsseldorf 1(DE)

(54) **VERFAHREN ZUR HERSTELLUNG EINES WERKSTOFFES FÜR DAS FUNKENEROSIVLEGIEREN.**

(57) Das Verfahren beinhaltet das Einleiten einer Verbrennungsreaktion in einem exothermen Gemisch folgender Zusammensetzung (in Masse-%) :

| Übergangsmetall | 32 bis 86 |
|---|---|
| Kohlenstoff und/oder Bor | 4 bis 28 |
| Modifizierungszuschlag | 1 bis 10 |

und das Verdichten fester Verbrennungsprodukte durch deren Extrusion mit 0,9 bis 0,995 Verformungsgrad in einem Temperaturbereich zwischen 1800 und 1000 °C unter nachfolgendem Halten des extrudierten Werkstoffes bei 500 bis 50 °C unter Vakuum oder in einem inerten Medium innerhalb von 0,1 bis 15 min.

Gebiet der Technik

Die Erfindung bezieht sich auf die Pulvermetallurgie und betrifft insbesondere ein Verfahren zur Herstellung eines Elektrodenwerkstoffes für das Elektrofunkenlegieren.

Zugrundeliegender Stand der Technik

Derzeit bekannte Verfahren zur Herstellung von Elektrodenwerkstoffen beinhalten herkömmliche Verfahrensschritte der Pulvermetallurgie wie Pressen und Vakuumsintern (I.M. Mukha "Hartmetalle in der kleinseriefertigung", 1981, Verl. "Naukova dumka", Kiev, S. 16 bis 30, 59 bis 77). Bei der Herstellung eines pulverförmigen Gemisches mit Gehalt an Titan- und Wolframkarbid sowie Kobalt als metallischer Binder wird zugleich ein Weichmacher, wie, z.B., Bienenwachs und Paraffin in einer Menge von 6 bis 10 Masse-% in dieses Gemisch eingegeben. Aus den erweichten Gemisch werden im Mundstück-Kaltpressen Werkstükke geformt, die dann zur Entfernung des Weichmachers aus dem Werkstoff bei 100 bis 300 °C gebrannt werden. Nach Bearbeitung läßt man die Werkstücke bei einer Temperatur zwischen 1400 und 1600 °C unter Vakuum innerhalb von mehreren Stunden sintern. Das beschriebene Verfahren zeichnet sich durch eine Mehrstufigkeit und einen erheblichen Energiebedarf aus. Der nach diesem Verfahren herstellbare Werkstoff weist ein heterogenes, grobkörniges und poröses Gefüge auf, was mit keiner vollständigen Entfernung des Weichmachers und mit keiner guten Kombination des festen Bestandteiles mit dem plastischen Binder zusammenhängt.

Aus obig genannten Gründen zeichnet sich dieser Elektrodenwerkstoff durch eine hohe elektroerosive Festigkeit und einen niedrigen Übertragungsfaktor während des Elektrofunkenlegierens aus. Aus diesem Werkstoff auf Schneidwerkzeuge aufgebrachte Schichten sind durch eine nicht hohe Verschleißfestigkeit, die lediglich 2 bis 3mal höher ist als dieser wert einer nicht verfestigten Oberfläche, gekennzeichnet. Es sei ebenfalls gesagt, daß bei geringfügiger Abweichung von den Herstellungsbedingungen des werkstoffes in Form von Elektroden diese eine krumme Gestalt sowie Makro- und Mikrorisse aufweisen.

Es ist ein Verfahren zum Warmpressen eines Elektrodenwerkstoffes für das Elektrofunkenlegieren /Ceram. Eng.Sci.Proc., v. 7, No. 7-8, 1986 (Richardson, C.Y., Rice, R.W., McDonough, W.V., Kunetz, I.M. und Schroeter, T, "Hot pressing of ceramics using self-propagating synthesis") bekannt, bei welchem ein pulverförmiges exothermes Gemisch hergestellt wird, in dem mindestens ein Übergangsmetall, wie z.B. Titan, eingesetzt in einem Überschuß (10 bis 30 Vol.-%) und Kohlenstoff und/oder Bor enthalten sind. Das Gemisch wird in eine Graphitpreßform, die mit einer keramischen Isolierschicht versehen ist, eingebracht und bei 34 MPa Druck gepreßt. Nachher leitet man eine Verbrennugsreaktion im verdichteten Gemisch ein. Nach der Entzündung der Reagenzien fällt der Druck erheblich ab, in etwa um 50 % des anfänglichen Wertes. Man erhöht den Druck aus einen Wert von 34 MPa und hält ihn innerhalb von 5 bis 10 min. Der auf der TiC- bzw. TiC-TiB-Grundlage hergestellte Werkstoff weist eine hohe Dichte und eine Porigkeit von ca. 1% auf, dessen Mikrostruktur dennoch nicht homogen bleibt. So weist er beispielsweise nicht restlos reagierten, nahe den Musterkanten gelegenen Kohlenstoff auf, was vermutlich durch eine Änderung des Druckes und der Gemischdichte in der Preßform oder durch eine ungleichmäßige Einleitung der Verbrennungsreaktion bedingt wird.

Dieser Elektrodenwerkstoff erweist sich nicht effektiv beim Beschichten von Schneidwerkzeugen durch das Elektrofunkenlegieren, weil er eine hohe elektroerosive Beständigkeit und einen niedrigen Übertragungsfaktor wegen des Titaneinsatzes als plastischen Binders besitzt. Die Verschleißfestigkeit der auf diese Weise beschichteten Oberfläche ist 1,5 bis 2mal so hoch wie die einer nicht verfestigten Oberfläche. Hinzu Kommt ferner, daß durch das Pressen hergestellte Brikette einer intensiven mechanischen Bearbeitung zwecks ihrer weiteren Benutzung als Elektroden bedürfen.

Offenbarung der Erfindung

Der Erfindung liegt die Aufgabe zugrunde, ein Verfahren zur Herstellung eines Elektrodenwerkstoffes für das Elektrofunkenlegieren durch die Wahl einer entsprechenden Zusammensetzung eines exothermen Gemisches und einer Fahrweise beim Verdichten der Verbrennungsprodukte, durch die dem Zweckprodukt ein homogenes feinkörniges Gefüge, eine mindere elektroerosive Beständigkeit und ein hoher Übertragungsfaktor beim Elektrofunkenlegieren verliehen werden, so daß sich die Wirksamkeit dessen Einsatzes vergrößert zu schaffen.

Diese Aufgabe ist dadurch gelöst worden, daß ein Verfahren zur Herstellung eines Elektrodenwerkstoffes für das Elektrofunkenlegieren vorgeschlagen ist, bei welchem ein pulverförmiges exothermes Gemisch hergestellt wird, in dem mindestens ein Übergangsmetall wie Kohlenstoff und/oder Bor enthalten ist, darin eine Verbrennungsreaktion eingeleitet wird und anfallende feste Verbrennungsprodukte verdichtet werden, bei welchem erfindungsgemäß ins exotherme Gemisch zusätzlich ein Modifizierungszuschlag, in dessen Eigenschaft einzeln oder kombiniert genommen Nitrid, Chalkogenid, und Oxid eines Elementes, gewählt aus der Gruppe: Übergangsmetall, Eisen, Kobalt, Nickel, Alkalimetall, Aluminium, Bor und Silizium, unter folgendem Verhältnis der Bestandteile (in Masse -%)

| | |
|---|---|
| Übergangsmetall | 32 bis 86 |
| Kohlenstoff und/oder Bor | 4 bis 28 |
| Modifizierungszuschlag | 1 bis 10 |

eingesetzt werden, eingegeben wird, und das Verdichten anfallender fester Verbrennungsprodukte durch deren Extrudieren durch eine Matrize mit 0,9 bis 0,995 Verformungsgrad in einem Temperaturbereich zwischen 1800 und 1000 °C mit nachfolgendem Halten des hergestellten Werkstoffes bei einer Temperatur von 500 bis 50 °C unter Vakuum oder in einem inerten Medium innerhalb einer Zeit, die für die Bildung daraus des Zweckproduktes mit homogenem feinkörnigem Gefüge ausreicht, vorgenommen wird.

Die geringe Energieintensität und die Gewinnung des Elektrodenwerkstoffes innerhalb eines technologischen Zyklus machen das erfindungsgemäße Verfahren hoch effektiv. Der Gehalt des exothermen Gemisches an den in den aufgeführten Bereichen liegenden Bestandteilen sowie die vorgeschlagenen Bedingungen für das Verdichten und das Halten sorgen für die Herstellung eines qualitätsgerechten Elektrodenwerkstoffes, der eine hohe Dichte, eine geringe Porigkeit und eine hohe Festigkeit bei einen homogenen feinkörnigen Gefüge aufweist und sich durch eine niedrige elektroerosive Beständigkeit und einen hohen Übertragungsfaktor bei dem Elektrofunkenlegieren auszeichnet. Die Verbesserung beider letzterer Eigenschaften dank dem Einsatz der Modifizierungszuschläge trägt dazu bei, daß aus diesem Werkstoff Schichten größtmöglicher Dicke bei maximaler Effektivität des Prozesses durch das Elektrofunkenlegieren aufgetragen werden. Darüber hinaus wird durch den Einsatz der Modifizierungszuschläge und die optimale Kombination des festen Bestandteiles und des plastischen Binders in Form des restlos nicht reagierten Übergangsmetalls, die im Werkstoff enthalten sind, den aufgetragenen Schichten eine hohe Verschleißfestigkeit, die um 2 bis 8mal höher ist als die der nicht verfestigten Oberfläche eines Schneidwerkzeuges oder eines Teiles, vermittelt.

Es empfiehlt sich hierbei, daß der extrudierte Werkstoff innerhalb einer Zeit zwischen 0,1 und 15 min gehalten wird und daß zum Abwandeln der Kennwerte des Zweckproduktes zusätzlich 10 bis 15 Masse-% zumindest eines aus folgender Gruppe ausgewählten Metalls: Kupfer, Eisen, Kobalt, Nickel oder Nickellegierung, in der Eigenshaft eines plastischen Bestandteiles zugesetzt werden.

Es ist ferner sinnvoll, daß zur Herstellung eines werkstoffes mit optimalem Verhalten ein exothermes Gemisch folgender Zusammensetzung (in Masse-%)

| | |
|---|---|
| Chrom | 7,8 bis 13,9 |
| Titan | 28,8 bis 49,8 |
| Kohlenstoff | 8,4 bis 14,6 |
| Bornitrid | 1,0 bis 3,0 |
| Chrom-Nickelstahl | 20,0 bis 48,0 |
| und Kupfer | 0,7 bis 2,0 |

eingesetzt wird.

Die Verschleißfestigkeit von daraus aufgebrachten Schichten wird am höchsten sein.

Die Zusammensetzung des exothermen Gemisches und die technologischen Bedingungen wurden im Versuch entsprechend den an den Elektrodenwerkstoff gestellten Forderungen ermittelt.

Bei der Herstellung des erfindungsgemäßen Elektrodenwerkstoffes leitet man in exothermen Gemisch eine Verbrennugsreaktion ein, die dank einer exothermen Wechselwirkung zwischen den Übergangsmetall und dem Nichtmetall abläuft, wobei der Modifizierungszuschlag an der Verbrennungsreaktion nicht beteiligt ist. Ihr Verhältnis ist so ausgewählt, daß das Übergangsmetall zugleich einen festen Bestandteil in Form dessen Karbids oder des Borids bildet und im Gefüge als plastisches Bindungsmittel verbleibt. Im Ergebnis hiervon bilden sich feste Verbrennungsprodukte in Form einer porösen Masse, deren Porenraum sich auf 50 % beziffern kann. Unter diesen Bedingungen ermöglichen die Prozesse des Kornwachstums von Übergangsmetallkarbiden bzw. -boriden, deren Koaleszenz und die Verteilung dazwischen des plastischen Bestandteiles und des Modifizierungszuschlages keine Herstellung eines Werkstoffes mit homogenem, feinem Gefüge. Die erhaltene poröse Masse aus den Verbrennugsprodukten verdichtet man auf dem wege der Extrusion durch eine Matrize mit einem Verformungsgrad zwischen 0,9 und 0,995 in einem Temperaturbereich von 1800 bis 1000 °C. Die Temperaturführung richtet sich nach der Plastizität der zu extrudierenden Masse, genauer gesagt, der obere Grenzwert liegt an maximal möglicher Schmelztemperatur des plastischen Bindungsmittels. Bei einer Temperatur von unter 1000 °C lassen sich die Verbrennungsprodukte ohne deren Zerstörung nicht extrudieren. Für die Schaffung günstiger Bedingungen für das Extrudieren und die Abwandlung der Eigenschaften des herzustellenden Werkstoffes dürfen Kupfer, Eisen, Nickel, Kobalt und deren Legierungen als plastisches Bindungsmittel eingegeben werden.

Der Verformungsgrad von 0,9 bis 0,995, bestimmt als $\psi = 1 - S/S_o$, worin $S_o$ der anfängliche Querschnittsflächeninhalt des Werkstücks und S die Durchgangsquerschnittsfläche der Matrize sind, wurde ausgehend von der geforderten mechanischen Festigkeit und minimalen Porigkeit des herstellbaren Werkstoffes festgelegt.

Experimentell wurde festgestellt, daß sich während der Extrusion mit einem Verformungsgrad von unter 0,9 die Porösität erhöht, die Festigkeit zurückgeht und auf der Oberfläche des geformten Werkstoffes Risse entstehen, wodurch das Zweckprodukt an seiner Güte einbüßt. Bei einem Verformungsgrad von über 0,995 wird der zu extrudierende Werkstoff gebrochen oder die Öffnung der Matrize infolge eines zu starken Widerstandes bei dem Auspressen verstopft. Zur Verminderung des Verformungsgrades auf einen Wert von unter 0,995 benutzt man Vielkanalmatrizen, für welche die Größe S als Gesamtflächeninhalt sämtlicher Austrittsöffnungen festgelegt wird. Zur Sicherung eines stabilen Ablaufes der Extrusion empfiehlt es sich, daß auf die Matrize eine Schmierung aus Bornitrid aufgebracht wird, die sich auf das Verhalten der zu extrudierenden Verbrennungsprodukte nicht auswirkt.

Einen der wichtigsten Kennwerte eines Elektrodenwerkstoffes stellt dessen im Volumen homogen verteiltes feinkörniges Gefüge dar. Dieses bildet sich von der Verbrennungswelle über die Extrusion bis an die langsame Kühlung. Eine rasche Abkühlung an Luft veranläßt ein nicht kontrollierbares Kornwachstum der festen Phase sowie eine Oxidation der Oberfläche des zu extrudierenden Werkstoffes auf Grund einer hohen Temperatur der Extrusion (T> 1000 °C). Daher wird vorgeschlagen, daß der extrudierte werkstoff in einen mit einem inerten Mittel gefüllten Raum oder in einen unter Vakuum stehenden Raum eingebracht und bei 500 bis 50°C innerhalb einer für die Bildung des geforderten Gefüges ausreichenden Zeit gehalten wird. Zum Formen des werkstoffes als Elektrode mit vorbestimmtem Durchmesser und vorbestimmter Länge Kann man sich zum Vermeiden dessen Formänderung während der Kühlung des Mundstücks der Matrize bedienen. Es steht fest, daß als optimale Haltezeit eine Zeit zwischen 0,1 und 15 min gilt. Diese hängt von der volumenbezogenen Temperatur der Phasenzusammensetzung des herzustellenden Werkstoffes ab. Das Halten bei einer über 500 °C liegenden Temperatur ergibt ein Kornwachstum, und beim Halten bei einer Temperatur von unter 50 °C bleibt das gewünschte Resultat aus, d.h., die hohe Gefügehomogenität wird nicht sichergestellt.

Als Folge hiervon erhält man einen Elektrodenwerkstoff, der im weiteren ohne nennenswerte mechanische Bearbeitung beispielsweise in Form von Elektroden zum Auftragen verschleißfester Schichten durch das Elektrofunkenlegieren einsetzbar ist.

Den Elektrodenwerkstoff untersuchte man auf die relative Erosion, (in %), den Übertragungsfaktor im Verlauf des Elektrofunkenlegierens (in %) und den Verfestigungskoeffizienten des aus diesem Werkstoff aufgetragenen Überzuges.

Die Erosion des Elektrodenwerkstoffes während des Elektrofunkenlegierens mißt man an dem mengenmäßigen Verlust der daraus gefertigten Legierungselektrode in der Zeiteinheit.

Nachstehend werden Werte für die relative Erosion des Elektrodenwerkstoffes im Vergleich zu einem Elektrodenwerkstoff aus 94 Masse-% WC + 6 Masse-% Co aufgeführt.

Der Übertragungsfaktor bei dem Elektrofunkenlegieren läßt sich als Verhältnis des Massenzuwachses des zu verfestigenden Teiles zum Massenverlust der Elektrode aus dem erfindungsgemäßen Elektrodenwerkstoff ermitteln. Er verweist auf die Menge des Elektrodenwerkstoffes, die auf das Teil beim Aufbringen einer verschleißfesten Schicht übertragen wurde. Der Übertragungsfaktor deutet auf die Erhöhung der Verschleißfestigkeit der mit dem erfindungsgemäßen Werkstoff legierten Oberfläche eines Teiles gegenüber einer nicht verfestigten Oberfläche eines Teiles.

Durchführungsbeispiele der Erfindung

Hergestellt wird ein exothermes Gemisch aus einem Titan-, Chrom-, Kohlenstoff-, Chrom-Nickelstahl- (18 Masse-% Cr, 15 Masse-% Ni, Rest Eisen), Kupfer- und Bornitridpulver unter deren Massenverhältnis von 48,4:13,1: :14,1:20:1,4:3 und bei einem Dispersionsgrad von 1 bis 150 μm durch ein sorgfältiges Mischen in einer Kugelmühle. Das gewonnene Gemisch schüttet man in eine Preßform ein, in welcher unter

4

EP 0 461 260 A1

Zuhilfenahme einer Wolframwendel eine Verbrennungsreaktion eingeleitet wird. Nach Ablauf von 5 s gelangen angefallene feste Verbrennungsprodukte in eine Matrize, durch deren Öffnung mit einem Durchmesser von 2 mm sie bei 1000 °C in ein auf 500 °C aufgeheiztes Mundstück, in welchem ein Vakuum aufrechterhalten wird, ausgepreßt werden. Der Verformungsgrad beläuft sich auf 0,994. Im Innern des Mundstücks wird der Werkstoff 15 min lang gehalten, indem die Mundstücktemperatur man langsam auf 50 °C absinken läßt. Man erhält einen Elektrodenwerkstoff, der die Form eines im Durchmesser 2 mm bemessenen Stabes hat.

Der Werkstoff hat folgende technische Daten:

| | |
|---|---|
| Korngröße, μm | 2,4 ± 0,3 |
| Relative Erosion, % | 160 |
| Übertragungsfaktor bei dem Elektrofunkenlegieren, % | 98. |

Auf die Oberfläche von Schneidplatten aus einem Schnellstahl (18 Masse-% WC, Rest Fe) wird durch das Elektrofunkenlegieren eine verschleißfeste Schicht aufgetragen. Der Verfestigungskoeffizient dieser Schicht beträgt 0,8.

Nachstehend werden andere Durchführungsbeispiele der Erfindung angeführt.

Beispiel 1.

Man stellt ein exothermes Gemisch aus einem Titan-, Kohlenstoff-, Nickel-, Bornitrid-, Molybdändisulfid- und Zirkoniumdioxidpulver bei deren Massenverhältnis von 32:8:50:3:4:3 und einem Dispersionsgrad von <150 μm durch Mischen in einer Trommelmühle her. Aus dem gewonnenen Gemisch werden durch Pressen zylindrische Werkstücke mit 50 g Masse und 25 mm Durchmesser gefertigt, die in eine Preßform eingelegt werden, in welcher mit Hilfe einer Wolframwendel eine Verbrennungsreaktion eingeleitet wird. Nach Ablauf von 2 Sekunden werden die angefallenen Verbrennungsprodukte bei 1800 °C durch eine 2 mm im Durchmesser bemessene Öffnung einer Matrize ausgepreßt, was einem Verformungsgrad von 0,994 entspricht. Im Anschluß daran gelangt der extrudierte Werkstoff in das auf 500 °C erhitzte Mundstück der Matrize, das mit Argon gespült wird. Gehalten wird es innerhalb von 10 min indem man die Temperatur langsam auf 50 °C absinken läßt. Der hergestellte Elektrodenwerkstoff hat die Form eines Stabes von 2 mm Durchmesser. Der Werkstoff weist folgende Daten auf:

| | |
|---|---|
| Korngröße, μm | 1,7 ± 0,3 |
| Relative Erosion, % | 150 |
| Übertragungsfaktor beim Elektrofunkenlegieren, % | 96. |

Auf die Oberfläche vor Schneidplatten aus einem Schnellstahl (18 Mas.-% WC, Rest Fe) wird durch das Elektrofunkenlegieren eine verschleißfeste Schicht aufgetragen. Der Verfestigungskoeffizient dieser Schicht ist mit 4.2 beziffert.

Nachstehend sind in einer Tabelle andere Beispiele für die Herstellung des erfindungsgemäßen Elektrodenwerkstoffes unter Angabe der Zusammensetzung des exothermen Gemisches, der Bedingungen für die Prozeßführung, der Kennwerte dieses Werkstoffes und des Verfestigungskoeffizienten der aus diesem Werkstoff aufgebrachten Schicht angeführt.

5

Tabelle

| lfd. Nr. | Zusammensetzung des exothermen Gemisches, in Masse -% | | | |
| --- | --- | --- | --- | --- |
| | Übergangsmetall | C | B | Modifizierungs-zuschlag |
| 1 | 2 | 3 | 4 | 5 |
| 2. | Zr - 86 | | 4 | BN-3; $MoS_2$-4; $ZrO_2$-3 |
| 3. | Ti-71 | | 28 | $B_2O_3$-1 |
| 4. | Ti-81.2 | 17,8 | | $MoS_2$-1 |
| 5. | Ti-32 | 8 | | TiN-10 |
| 6. | Ta-84 | 5 | | $Al_2O_3$-1 |
| 7. | Ti-61 | | 28 | $SiO_2$-1 |
| 8. | Ti-30; Cr-24 | 11 | | BN-3 |
| 9. | Ti-56,7 | 6,4 | 14,9 | $Fe_2O_3$-3 |
| 10. | Ti-48 | 12 | | TiN-5, $WSe_2$-5 |
| 11. | Ti-48 | 12 | | Cao-3; AlN-2 |
| 12. | Ti-39,7; Cr-10,8 | 11,5 | | BN-2,0 |
| 13. | Ti-30,1; Cr-8,2 | 8,7 | | BN-1,0 |
| 14. | Ti-48,4; Cr-13,1 | 14,1 | | BN-3,0 |
| 15. | Ti-28,8; Cr-7,8 | 8,4 | | BN-2,0 |
| 16. | Ti-49,8; Cr-13,9 | 14,6 | | BN-1,0 |

Fortsetzung der Tabelle

| Lfd. Nr. | Ablaufbedingungen d.technolog. Prozesses | | | | | |
|---|---|---|---|---|---|---|
| | | | Extrusion | | Halten | |
| | Metall | Legierung | $\psi$ | T, °C | T, °C | $\tilde{\iota}$, min. |
| 1 | 6 | 7 | 8 | 9 | 10 | 11 |
| 2. | | | 0,994 | 1800 | 500 | 10 |
| 3. | | | 0,92 | 1600 | 500 | 15 |
| 4. | | | 0,9 | 1600 | 400 | 15 |
| 5. | Ni-50 | Stahl-10 (Ni-9, Cr-18, Rest Fe) | 0,995 | 1400 | 500 | 10 |
| 6. | | | 0,9 | 1200 | 50 | 0,1 |
| 7. | Co-10 | | 0,92 | 1300 | 400 | 1 |
| 8. | Ni-30; Cu-2 | | 0,994 | 1400 | 200 | 5 |
| 9. | Co-15; Cu-2 | | 0,94 | 1300 | 100 | 1 |
| 10. | Ni-30 | | 0,98 | 1400 | 300 | 10 |
| 11. | Ni-35 | | 0,99 | 1400 | 200 | 10 |
| 12. | Cu-0,7 | Stahl-35 (Cr-18, Ni-15, Rest Fe) | 0,96 | 1200 | 300 | 5 |
| 13. | Cu-2,0 | Stahl-50 | 0,994 | 1100 | 400 | 10 |
| 14. | Cu-1,4 | Stahl-20 | 0,994 | 1000 | 500 | 15 |
| 15. | Cu-2,0 | Stahl-50 | 0,99 | 1100 | 500 | 15 |
| 16. | Cu-0,7 | Stahl-20 | 0,94. | 1200 | 200 | 5 |

Des Halten des extrudierten Werkstoffes gemäß den Beispielen 2 bis 11 erfolgte unter Argonatmosphäre und gemäß den Beispielen 12 bis 16 unter Vakuum.

7

Fortsetzung der Tabelle

| Lfd. Nr. | kennwerte des Elektrodenwerkstoffes | | | |
|---|---|---|---|---|
| | Korngröße, µm | Relative Erosion, % | Übertragungskoeffizient beim Elektrofunkenlegieren, % | Verfestigungskoeffizient |
| 1 | 12 | 13 | 14 | 15 |
| 2. | 0,7 ± 0,3 | 150 | 86 | 4,2 |
| 3. | 4,1 ± 0,5 | 125 | 90 | 4,5 |
| 4. | 3,2 ± 0,4 | 140 | 89 | 4,9 |
| 5. | 2,1 ± 0,3 | 155 | 99 | 3,5 |
| 6. | 3,8 ± 0,4 | 140 | 94 | 3,9 |
| 7. | 3,9 ± 0,5 | 130 | 92 | 4,5 |
| 8. | 3,0 ± 0,3 | 135 | 96 | 5,0 |
| 9. | 3,6 ± 0,4 | 140 | 94 | 4,7 |
| 10. | 2,5 ± 0,3 | 150 | 95 | 5,0 |
| 11. | 2,8 ± 0,4 | 150 | 98 | 4,8 |
| 12. | 2,1 ± 0,4 | 150 | 0,98 | 7,5 |
| 13. | 1,4 ± 0,2 | 145 | 0,99 | 7,0 |
| 14. | 2,4 ± 0,3 | 160 | 0,98 | 8.0 |
| 15. | 1,2 ± 0,2 | 145 | 0,99 | 7,1 |
| 16. | 2,5 ± 0,4 | 160 | 0,98 | 7,8 |

Gewerbliche Anwendbarkeit

Der nach dem erfindungsgemäßen Verfahren herstellbare Werkstoff findet beim Auftragen von verschleißfesten Schichten auf Schneid- und Stanzwerkzeuge und auf andere, in der Maschinenbauindustrie einsetzbare Teile Anwendung.

**Patentansprüche**

1. Verfahren zur Herstellung eines Elektrodenwerkstoffes für das Elektrofunkenlegieren, bei welchem ein pulverförmiges exothermes Gemisch hergestellt wird, in dem mindestens ein Übergangsmetall wie Kohlenstoff und/oder Bor enthalten ist, darin eine Verbrennungsreaktion eingeleitet wird und anfallende feste Verbrennungsprodukte verdichtet werden, **dadurch gekennzeichnet**, daß in das exotherme Gemisch zusätzlich ein Modifizierungszuschlag eingegeben wird, in dessen Eigenschaft einzeln oder kombiniert genommen Nitrid, Chalkogenid und Oxid eines Elementes, gewählt aus der Gruppe: Übergangsmetall, Eisen, Kobalt, Nickel, Alkalimetall, Aluminium, Bor und Silizium, bei folgendem Verhältnis der Bestandteile (in Masse-%):

| | |
|---|---|
| Übergangsmetall | 32 bis 86 |
| Kohlenstoff und/oder Bor | 4 bis 28 |
| Modifizierungszuschlag | 1 bis 10 |

eingesetzt werden und daß das Verdichten anfallender fester Verbrennungsprodukte dank deren Extrudieren durch eine Matrize mit 0,9 bis 0,995 Verformungsgrad in einem Temperaturbereich zwischen 1800 und 1000 °C bei nachfolgendem Halten des hergestellten Werkstoffes bei einer Temperatur zwischen 500 und 50 °C unter Vakuum oder in einem inerten Medium innerhalb einer Zeit, die für die Bildung daraus des Zweckproduktes mit homogenem feinkörnigen Gefüge ausreicht, vorgenommen wird.

2. Verfahren nach Anspruch 1, **dadurch gekennzeichnet**, daß das Halten des genannten Werkstoffes eine Zeit von 0,1 bis 15 min in Anspruch nimmt.

3. Verfahren nach Anspruch 1, **dadurch gekennzeichnet**, daß ins exotherme Gemisch zusätzlich 10 bis 15 Masse-% zumindest eines aus folgender Gruppe ausgewählten Metalls: Kupfer, Eisen, Kobalt, Nickel oder Nickellegierung eingegeben werden.

4. Verfahren nach Anspruch 3, **dadurch gekennzeichnet**, daß ein exothermes Gemisch folgender Zusammensetzung (in Masse-%)

| | |
|---|---|
| Chrom | 7,8 bis 13,9 |
| Titan | 28,8 bis 49,8 |
| Kohlenstoff | 8,4 bis 14,6 |
| Bornitrid | 1,0 bis 3,0 |
| Chrom-Nickelstahl | 20,0 bis 48,0 |
| und Kupfer | 0,7 bis 2,0 |

eingesetzt wird.

5. Verfahren nach Anspruch 1, **dadurch gekennzeichnet**, daß die Extrusion der festen Verbrennungsprodukte durch eine Matrize stattfindet, auf die eine Schmierung auf der Bornitridgrundlage aufgetragen ist`

6. Werkstoff, der nach dem Verfahren gemäß den Ansprüchen 1 und 4 hergestellt ist.

# INTERNATIONAL SEARCH REPORT

International Application No PCT/SU89/00342

## I. CLASSIFICATION OF SUBJECT MATTER (if several classification symbols apply, indicate all) [6]

According to International Patent Classification (IPC) or to both National Classification and IPC

Int.Cl.5    C22C 1/04, B23H 7/22

## II. FIELDS SEARCHED

Minimum Documentation Searched [7]

| Classification System | Classification Symbols |
|---|---|
| Int.Cl.5 | C22C 1/04, B23H 7/22, 7/24 |

Documentation Searched other than Minimum Documentation
to the Extent that such Documents are Included in the Fields Searched [8]

## III. DOCUMENTS CONSIDERED TO BE RELEVANT [9]

| Category [*] | Citation of Document, [11] with indication, where appropriate, of the relevant passages [12] | Relevant to Claim No. [13] |
|---|---|---|
| A | A.G. Merzhanov"SAMORASPROSTRANYAJUSCHIISYA VYSOKOTEMPERATURNY SINTEZ:DVADTSAT LET POISKOV I NAKHODOK" 1989, AN SSSR INSTITUT STRUKTURNOI MAKROKINETIKI (CHERNOGOLOVKA) page 55 | 1 |
| A | FIZICHESKAYA KHIMIA. SOVREMENNYE PROBLEMY. POD REDAKTSIEI YA. M. KOLOTYRKINA, 1983, KHIMIA (MOSCOW) page 41 | 1 |
| A | "SAMORASPROSTRANYAJUSCHIISYA VYSOKOTEMPE-RATURNY SINTEZ", (SBORNIK ANNOTATSY) No. 2, 1989 (CHERNOGOLOVKA) pages 31,32 | 1 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 16 August 1990 (16.08.90) | 12 September 1990 (12.09.90) |

| International Searching Authority | Signature of Authorized Officer |
|---|---|
| ISA/SU | |

Form PCT/ISA/210 (second sheet) (January 1985)